# EUROPEAN PATENT APPLICATION

(11) **EP 4 809 826 A1**
(43) Date of publication of application: **23.09.2026**
(21) Application number: 24891423.6
(22) Date of filing: 13.11.2024
(51) Int. Cl.: A21D 2/26, A21D 2/18, A21D 2/32, A23D 7/00, A23D 7/005, A23J 3/00, A23L 15/00

(54) **BAKERY FOOD COMPOSITION, METHOD FOR PRODUCING SAME, DOUGH FOR BAKERY, BAKERY FOOD, AND METHOD FOR SUBSTITUTING FOR EGG IN BAKERY FOOD**

(30) Priority: 16.11.2023 JP 2023195228
(71) Applicant: ADEKA CORPORATION, Arakawa-ku Tokyo 116-8554 (JP)
(72) Inventor: MIWA, Tomoko, Tokyo 116-8554 (JP); KOBAYASHI, Yuuta, Tokyo 116-8554 (JP); SATO, Katsuhiko, Tokyo 116-8554 (JP)
(74) Representative: Forstmeyer, Dietmar
(86) International application number: PCT/JP2024/040278
(87) International publication number: WO 2025/105387

(57) **Abstract**

The invention provides a composition for bakery products that enables the production of bakery products with high volume and an airy, fine crumb structure, and a soft texture, particularly a composition for bakery products that achieves these effects with reduced egg usage or without using egg. There is provided a composition containing a lipid-protein complex and a thickening agent, wherein the content of the thickening agent in the composition is 0.01 to 1.0 parts by mass per part by mass of the solids of the lipid-protein complex. The lipid constituting the complex preferably contains a plant phospholipid.

## Description

### Technical Field

This invention relates to a composition for bakery products, particularly a composition that can be used as a substitute for egg in bakery products, a method for producing the composition, bakery dough, bakery products, and a method for substituting for egg in bakery products.

### Background Art

Eggs, particularly chicken eggs, are used in a variety of food products because of their favorable flavor and excellent functionality. Among these food products, bakery products, including breads and baked confectionery, such as cakes, feature high volume and a moderately elastic and soft texture that are largely attributable to the foamability and thermal coagulability of eggs. However, eggs face supply instability issues, such as reduced supply and price surges due to outbreaks of egg-laying animal infectious disease.

To reduce the egg usage, bakery products with a reduced egg content have been studied. However, since egg plays an important function in bakery products as discussed above, simply reducing the egg content leads to low volume due to poor rise in heat-processing, resulting in baked products with a dense, firm texture.

To address this problem, research has been conducted on compositions that can serve as an egg substitute or be used in combination with a minimal amount of egg to produce bakery products with a reduced egg content. One such composition contains mainly one or more thickening polysaccharides.

For instance, patent literature 1 listed below discloses a composition that contains at least one specific thickening polysaccharide and at least one specific starch and can function to substitute for egg albumen.

As another approach, compositions composed mainly of protein derived from sources other than eggs have been studied. For instance, patent literature 2 discloses a composition for producing egg-free, simulated egg food products. This composition includes whey protein, a soybean material containing a lipoxygenase deactivated soy flour, and a pH modifying agent effective to alkalize the composition upon hydration. By mixing the composition with water and cooking the mixture, a simulated egg food product can be produced that has organoleptic properties similar to those of egg food products prepared using chicken eggs.

Recently, there has been an increasing demand for the development of food products that are free of animal allergens, such as egg and milk allergens, as well as food products that are accepted by vegetarians and vegans. Under such circumstances, studies have also been directed to compositions including plant-based protein.

For instance, patent literature 3 proposes a whole fat soybean flour-containing composition including whole fat soybean flour, plant protein, an emulsifying agent, and a masking agent. Patent literature 4 teaches a substitute for eggs. The substitute is for spongy food products and characterized by containing a hydrolyzed soybean material satisfying specific conditions.

Because of the concern regarding the protein's distinctive flavor which has the potential to adversely affect the flavor of bakery products, the use of a composite of protein and other ingredients, particularly lipid, instead of protein itself has been investigated to improve the quality of bakery products.

For instance, patent literature 5 discloses a quality-improving agent for farinaceous food products, which is obtained by mixing and dispersing protein, peptide, and lipid in water and emulsifying the mixture to form a composite.

### Citation List

### Patent Literature

Patent literature 1: US 2024/099347A1
Patent literature 2: US 2020/187531A1
Patent literature 3: US 2011/008522A1
Patent literature 4: WO2015/122424
Patent literature 5: JP 2005-185223A

### Summary of Invention

### Technical Problem

The inventions disclosed in Patent literatures 1 through 5 cited above have problems described below.

Patent literature 1 purports that the composition is effective in preventing caving when used as an egg substitute in bakery products. However, the resulting bakery products have insufficient volume with a dense crumb, offering a gel-like firm texture.

The composition of patent literature 2 contains an animal protein; therefore, the bakery products made with this composition in place of egg are not suitable for vegetarians or vegans. In addition to this problem, the bakery products made by using the composition of patent literature 2 as an egg substitute have room for improvement in volume, crumb structure, and texture.

The composition of patent literature 3 and the egg substitute of patent literature 4 are poorer in foamability than eggs when used as an egg substitute in bakery dough, and the resulting bakery products have low volume and a poor crumb structure.

The quality-improving agent of patent literature 5 is capable of improving bakery product qualities, such as texture. However, there is neither description nor suggestion about the possibility of providing bakery products with high volume, a fine crumb structure, and a soft texture when used as an egg substitute.

An object of the invention is to provide a composition for bakery products that enables the production of bakery products with high volume, a fine, airy crumb structure, and a soft texture, and particularly a composition for bakery products that achieves these effects with reduced egg usage or without using egg.

### Solution to Problem:

As a result of intensive investigation, the inventors have found that a composition containing a lipid-protein complex and a thickening agent in a thickening agent to complex ratio within a specific range can solve the above problems and completed the present invention. The invention includes the following.
(1) A composition for bakery products, containing a lipid-protein complex and a thickening agent, wherein the content of the thickening agent in the composition is 0.01 to 1.0 parts by mass per part by mass of the solids of the lipid-protein complex.
(2) The composition of clause (1), wherein the lipid constituting the lipid-protein complex contains a plant phospholipid.
(3) The composition of clause (1) or (2), wherein the thickening agent includes at least one member selected from the group consisting of alginic acid, alginate salts, propylene glycol alginate ester, guar gum, gellan gum, xanthan gum, methyl cellulose, and hydroxypropylmethyl cellulose.
(4) The composition of clause (1) or (2), further containing water and fat and/or oil and being an emulsion with an aqueous phase as a continuous phase.
(5) The composition of clause (1) or (2), being an egg substitute composition.
(6) The composition of clause (1) or (2), wherein the bakery products are baked confectionery products.
(7) Bakery dough containing a lipid-protein complex and a thickening agent, wherein the content of the thickening agent in the bakery dough is 0.01 to 1.0 parts by mass per part by mass of the solids of the lipid-protein complex.
(8) A bakery product being a heat-processed product of the bakery dough of clause (7).
(9) A method for producing a composition for bakery products, the composition comprising a lipid-protein complex and a thickening agent, wherein the content of the thickening agent in the composition is 0.01 to 1.0 parts by mass per part by mass of the solids of the lipid-protein complex,
   the method including:
   (Step 1) homogenizing a liquid mixture containing a lipid and a protein to form a lipid-protein complex.
(10) A method for substituting for egg in bakery products, including incorporating a composition for bakery products into bakery dough, wherein the composition contains a lipid-protein complex and a thickening agent, and the content of the thickening agent in the composition is 0.01 to 1.0 parts by mass per part by mass of the solids of the lipid-protein complex.

### Advantageous Effects of Invention

The composition for bakery products of the invention enables the production of bakery products with high volume, a fine, airy crumb structure, and a soft texture. Using the composition as an egg substitute composition achieves these effects with reduced egg usage or without using egg.

### Description of Embodiments

Preferred embodiments of the invention will be described. The invention is not construed as being limited by the description below, and various changes and modifications can be made in these embodiments without departing from the spirit and scope of the invention.

### [Composition for Bakery Product]

The composition for bakery products of the invention, hereinafter referred to as the "baking composition" or the "composition of the invention" or more simply "the composition", contains a lipid-protein complex and a thickening agent. The content of the thickening agent is 0.01 to 1.0 parts by mass per part by mass of the solids of the lipid-protein complex.

### <Lipid-Protein Complex>

The lipid-protein complex that constitutes the baking composition of the invention will be described below.

The term "lipid-protein complex" as used herein refers to a higher-order structure containing a protein and a lipid, the structure being formed through the strong affinity between the protein and the lipid. A mixture merely containing protein and lipid is not encompassed by the lipid-protein complex.

The lipid and protein that constitute the lipid-protein complex contained in the baking composition of the invention are described below. The lipid-protein complex contained in the baking composition of the invention is hereinafter referred to as "the complex of the invention", or more simply "the complex".

### <<Lipid of Lipid-Protein Complex>>

Any lipids can be used to form the complex of the invention with no particular limitation. Useful lipids include triglycerides, diglycerides, monoglycerides, phospholipids, sorbitan fatty acid esters, propylene glycol fatty acid esters, sucrose fatty acid esters, and polyglycerol fatty acid esters. Any one or more selected from the above-recited lipids can be used.

To ensure that the bakery product containing the baking composition of the invention has high volume, an airy, fine crumb structure, and a soft texture, the lipid forming the complex is preferably at least one selected from the group consisting of monoglycerides, phospholipids, sorbitan fatty acid esters, propylene glycol fatty acid esters, sucrose fatty acid esters, and polyglycerol fatty acid esters, with phospholipids being more preferred.

It is particularly preferred that the lipid forming the complex be partially or entirely composed of phospholipid. The content of the phospholipid in the lipid used to form the complex is such that the mass ratio of the phospholipid to other lipid used to form the complex, phospholipid : other lipid, is preferably in the range of from 30:70 to 100:0, more preferably from 60:40 to 100:0, and even more preferably from 80:20 to 100:0.

Depending on the intended use, the above-recited lipids may be used either individually or in any combination of two or more thereof.

The complex may contain the phospholipid in the form of lecithin. In that case, lecithin with a mass ratio of phospholipid to other lipid in the lecithin, phospholipid : other lipid, in the range of 30:70 to 100:0 can be used. The mass ratio of phospholipid to other lipid in lecithin is preferably 60:40 to 100:0, and more preferably 80:20 to 100:0.

The source of the phospholipid used to form the complex is not limited. Examples of the phospholipid include plant phospholipids derived from soybeans, sunflower, rice, safflower, and rapeseed; animal phospholipids derived from egg yolk, fish eggs, and milk; and microbial phospholipids derived from microorganisms. The extracts, purified products, and enzyme-treated products of these phospholipids are also useful. Specific examples of the phospholipid include phosphatidic acid, phosphatidylcholine, phosphatidylethanolamine, phosphatidylinositol, phosphatidylserine, and sphingomyelin. These phospholipids may be used either individually or in combination of two or more thereof.

The phospholipid of the complex preferably includes a plant phospholipid derived from, e.g., soybeans, sunflower, rice, safflower, or rapeseed or a microbial phospholipid derived from microorganisms, more preferably includes a plant phospholipid for the following reasons: it allows for the production of food products free of egg and milk allergies; it allows for the production of food products suitable for vegetarians and vegans; and it provides a baking composition useful as an egg substitute composition. It is particularly preferred to use at least one selected from the group consisting of the plant phospholipids derived from soybeans and sunflower because they have high capability to complex with protein, thereby producing the effects of the invention more easily.

When the lipid forming the complex contains a plant phospholipid, the proportion of the plant phospholipid in the total lipids forming the complex is preferably 50 mass% or more, more preferably 70 mass% or more, even more preferably 80 mass% or more, and most preferably 90 mass% or more. The upper limit of the proportion of the plant phospholipid in the total lipids forming the complex is 100 mass%.

### <<Protein of Lipid-Protein Complex>>

Any protein can be used to form the complex of the invention with no particular limitation. Useful proteins include animal proteins, microbial proteins, and plant proteins.

The animal proteins include milk proteins, such as whey protein and casein protein; and egg proteins, such as low-density lipoproteins, phosvitin, livetin, phosphoglycoprotein, ovalbumin, conalbumin, and ovomucoid. The plant proteins include wheat proteins, such as gliadin, glutenin, prolamin, and glutelin; legume proteins, such as soybean protein, pea protein, fava bean protein, mung bean protein, chickpea protein, and lentil protein; rice proteins; algae proteins, such as chlorella protein; and others. These proteins can be used either individually or in combination of two or more thereof.

The protein of the complex is preferably one or more of microbial and plant proteins, more preferably one or more of plant proteins, for the following reasons: it allows for the production of food products free of egg and milk allergies; it allows for the production of food products suitable for vegetarians and vegans; and it provides a baking composition useful as an egg substitute composition. Of the plant proteins, at least one selected from the group consisting of wheat proteins, legume proteins, rice proteins, and algae proteins is preferred, with at least one of legume and algae proteins being even more preferred. Of the legume and algae proteins, at least one selected from the group consisting of soybean, pea, fava bean, mung bean, chickpea, lentil, and chlorella proteins is particularly preferred because of their high capability to complex with lipid and therefore great ease of producing the effects of the invention. Among them, at least one of soybean, fava bean, mung bean, lentil, and chlorella proteins is the most preferred.

When chlorella protein is chosen for the complex formation from the preferable proteins, it is desirably used in combination with a legume protein, particularly soybean protein to highly increase the volume of the resulting bakery products.

When chlorella and legume proteins are used in combination, the proportions of chlorella and legume proteins in the total proteins in the complex are preferably 10 to 90 mass% and 10 to 90 mass%, respectively, and more preferably 15 to 75 mass% and 25 to 85 mass%, respectively.

The lipid-protein complex preferably contains 10 to 250 parts by mass, more preferably 20 to 200 parts, even more preferably 30 to 150 parts, and most preferably 35 to 150 parts, of the lipid per 100 parts by mass of the protein. This will ensure that the baking composition provides bakery products with high volume, an airy, fine crumb structure, and a soft texture and that the use of the composition as an egg substitute composition achieves these effects with reduced egg usage or without using egg. In addition, this ratio is effective in preventing an aqueous solution containing the protein and lipid used to prepare the protein-lipid complex from increasing in viscosity or gelling, thus facilitating the preparation of the complex.

### <<Water Content of Lipid-Protein Complex>>

The complex of the invention may contain water. The water content present in the complex may originate from added water, such as tap water or mineral water, and from the water and moisture contents of the lipid and the protein described above and also the other materials used to form the complex, which will be described later.

The water content of the complex may vary and depends on the desired physical form of the complex. For example, for flowable complexes, such as liquid or paste, and gel complexes, the water content is preferably 50.0 to 98.0 mass%, more preferably 60.0 to 94.0 mass%, and even more preferably 70.0 to 90.0 mass%. For solid complexes, such as powder or granules, the water content is preferably 20.0 mass% or less, preferably 10.0 mass% or less, and even more preferably 5.0 mass% or less, with the lower limit being 0 mass%.

### <<Method for Preparing Lipid-Protein Complex>>

The method for preparing the complex of the invention may be the following method, for example.

A protein or a protein-containing foodstuff and a lipid or a lipid-containing foodstuff are added to water. According to necessity, other components, which will be described later, are also added here to prepare a liquid mixture containing the protein and the lipid. The liquid mixture is then homogenized to form a lipid-protein complex. The liquid mixture resulting from the homogenization contains the lipid-protein complex. The amounts of the protein or protein-containing foodstuff and the lipid or lipid-containing foodstuff to be used are preferably adjusted appropriately so that the lipid to protein ratio in the resulting complex may fall within the preferred range recited above.

When in using a protein-containing foodstuff or a lipid-containing foodstuff, the amounts of the protein and the lipid constituting the complex are calculated from the pure protein and lipid contents present in the respective foodstuffs.

The liquid mixture containing the protein and lipid preferably has a protein content of 1.0 to 25.0 mass%, more preferably 2.0 to 22.0 mass%, and even more preferably 3.0 to 20.0 mass%, and preferably has a lipid content of 0.5 to 25.0 mass%, more preferably 0.7 to 22.0 mass%, and even more preferably 1.0 to 20.0 mass%. When the protein and lipid contents of the liquid mixture are within these ranges, lump formation during the preparation of the complex is prevented, facilitating thorough homogenization to produce a lipid-protein complex efficiently.

In the formation of the lipid-protein complex, components other than the protein, lipid, and water may be contained in the liquid mixture with no particular limitation. The other components include various foodstuffs and food additives, including emulsifiers other than the above-described lipids, metal ion scavengers, saccharides, sugar alcohols, high-intensity sweeteners, edible salt, inorganic salts, organic acid salts, enzymes, flavorings, acidulants, bitterants, taste components, colorings, preservatives, antioxidants, pH adjusters, spices, spice extracts, herbs, dextrins (e.g., straight-chain dextrins, branched dextrins, and cyclic dextrins), anticaking agents (e.g., finely particulate silicon dioxide, magnesium carbonate, disodium phosphate, and magnesium oxide), vitamins, glazing agents, alkali agents (e.g., ammonium bicarbonate), and others. These additional components can be used either individually or in any combination of two or more thereof.

To ensure efficient complex formation between protein and lipid, the total amount of the other components in the complex (e.g., the liquid mixture before homogenization) is preferably 10 mass% or less, more preferably 5 mass% or less, even more preferably 3 mass% or less, still more preferably 1 mass% or less, and most preferably 0 mass%.

The apparatus that can be used for homogenization includes high-shear emulsifiers (e.g., cheese processing kettles and Stephan-type mixers), high-shear mixers (e.g., Comitrol and Masscolloider), static mixers, in-line mixers, homogenizers, colloid mills, and dispersion mills. The homogenization process can be carried out using, e.g., a two-stage homogenizer at a homogenizing pressure of 3 to 100 MPa in the first stage and 0 to 5 MPa in the second stage. When the homogenization process is performed in a single stage, the homogenizing pressure can be, for example, 0 to 100 MPa.

The homogenized liquid mixture (complex) may be subjected to disinfection and/or sterilization. Any disinfection or sterilization process can be employed, including direct heating (e.g., steam injection, infusion, or microwave) and indirect heating (e.g., batch, plate, tubular, or scraped-surface systems). These treatments can be performed using UHT, HTST, LTLT, batch processing, retorting, microwave heating, open-fire heating, or the like.

The conditions of the disinfection and sterilization processes can be suitably adjusted. For example, the heating temperature is preferably 60° to 160°C, more preferably 100° to 150°C, and even more preferably 125° to 150°C. The heating time may vary according to the temperature but is preferably 2 seconds to 120 minutes, more preferably 5 seconds to 3 minutes, and even more preferably 5 to 15 seconds, for example.

The resulting complex may undergo frozen storage treatment.

The starting temperature of the frozen storage treatment (the temperature of the liquid mixture to be frozen) is not particularly limited as long as the liquid mixture does not freeze, and preferably 0 to 10°C, more preferably 1° to 10°C, and even more preferably 3° to 7°C, for example. The ending temperature of the frozen storage treatment (the frozen storage temperature) is not particularly limited but is preferably -40° to -5°C, more preferably -30° to -10°C, and even more preferably -25° to -18°C, for example.

The freezing time may vary depending on the starting and ending temperatures of the frozen storage treatment. For example, it is preferred to extend the freezing process for 30 minutes or longer, more preferably 1 hour or longer, and even more preferably 3 hours or longer, after the predetermined ending temperature is reached.

The freezing process may be performed either quickly at a cooling rate of 2°C/h or higher, or slowly at a cooling rate of lower than 2°C/h. However, slow freezing is preferred in the invention.

Before beginning the freezing process, the liquid mixture may be precooled to the desired starting temperature within the preferred range recited above.

The complex of the invention may be in any of various forms, including solid forms such as powder and granules, flowable forms such as liquid and paste, and gel form. From the standpoint of mixability with other components during the production of the baking composition of the invention, the complex is preferably in powder, liquid, paste, or gel form, with liquid, paste, and gel forms being more preferred.

The complex in the form of solid (e.g., powder or granules) or gel can be obtained by, for example, removing water from the liquid mixture containing the complex using lyophilization, spray drying, and similar processes.

When the complex is used in a flowable form (e.g., liquid or paste), the liquid mixture containing the complex as prepared above can be used as such.

To ensure that the bakery products produced with the baking composition of the invention have high volume, an airy, fine crumb structure, and a soft texture and that, in particular, the use of the composition as an egg substitute composition achieves these effects with reduced egg usage or without using egg, the content of the complex in the baking composition is preferably 1 to 20 mass%, more preferably 2 to 18 mass%, and even more preferably 3 to 15 mass%, on a solids basis. As used herein, the term "solids" refers to the total mass of all components other than water; hereinafter the same.

### <<Thickening Agent>>

The composition of the invention contains a thickening agent. As the thickening agent, any known thickening agents can be used without limitation. Useful thickening agents include alginic acid; alginate salts, such as ammonium alginate, potassium alginate, calcium alginate, and sodium alginate; propylene glycol alginate ester, pectin, LM pectin, HM pectin, locust bean gum, guar gum, gellan gum, xanthan gum, carrageenan, curdlan, tamarind seed gum, psyllim seed gum, karaya gum, tara gum, tragacanth gum, gum arabic, pullulan, crystalline cellulose, methyl cellulose, carboxymethyl cellulose, hydroxypropylmethyl cellulose, algae extracts, algae extracts, agar, dextrins, starches, and modified starches. One or more of these thickening agents can be used.

To ensure that bakery products with high volume, an airy, fine crumb structure, and a soft texture can be obtained and that, in particular, the use of the composition as an egg substitute composition achieves these effects with reduced egg usage or without using egg, the thickening agent is preferably at least one selected from the group consisting of alginic acid, alginate salts, propylene glycol alginate ester, guar gum, gellan gum, xanthan gum, methyl cellulose, and hydroxypropylmethyl cellulose.

To ensure that bakery products with high volume, an airy, fine crumb structure, and a soft texture can be obtained and that, in particular, the use of the composition as an egg substitute composition achieves these effects with reduced egg usage or without using egg, the content of the thickening agent in the composition is preferably 0.1 to 5.0 mass%, more preferably 0.3 to 4.0 mass%, and even more preferably 0.5 to 3.0 mass%.

The composition contains 0.01 to 1.0 parts by mass of the thickening agent per part by mass of the solids of the complex present in the composition. To ensure that bakery products with high volume, an airy, fine crumb structure, and a soft texture can be produced and that, in particular, the use of the composition as an egg substitute composition achieves these effects with reduced egg usage or without using egg, the thickening agent content is preferably 0.01 to 0.5 parts by mass, more preferably 0.02 to 0.4 parts by mass, and even more preferably 0.04 to 0.3 parts by mass, per part by mass of the solids of the complex in the composition.

To ensure obtaining bakery products with high volume, an airy, fine crumb structure, and a soft texture even when the composition of the invention is used as an egg substitute composition, the thickening agent preferably includes at least one member selected from Group A below and at least one member selected from Group B below. More preferably, the thickening agent further includes at least one member selected from Group C below in addition to the thickening agents from Groups A and B.
Group A: alginic acid, alginate salts, and propylene glycol alginate ester
Group B: methyl cellulose and hydroxypropylmethyl cellulose
Group C: gellan gum and xanthan gum

### <<Thickening Agent of Group A>>

The baking composition preferably contains at least one of alginic acid, alginate salts, and propylene glycol alginate ester, which belong to Group A, more preferably propylene glycol alginate ester, in combination with a thickening agent of Group B described hereunder.

The proportion of the thickening agent(s) of Group A in the total thickening agents in the composition is preferably 25 to 75 mass%, more preferably 30 to 70 mass%.

### <<Thickening Agent of Group B>>

The baking composition preferably contains at least one of methyl cellulose and hydroxypropylmethyl cellulose, which belong to Group B, more preferably both methyl cellulose and hydroxypropylmethyl cellulose, in combination with the thickening agent(s) of Group A.

When both methyl cellulose and hydroxypropylmethyl cellulose are used as Group B thickening agents, the mass ratio of methyl cellulose to hydroxypropylmethyl cellulose, methyl cellulose : hydroxypropylmethyl cellulose, preferably ranges from 25:75 to 75:25, more preferably 50:50 to 75:25.

The proportion of the thickening agent(s) of Group B in the total thickening agents in the composition is preferably 25 to 75 mass%, more preferably 25 to 60 mass%.

### <<Thickening Agent of Group C>>

The baking composition preferably further contains at least one of gellan gum and xanthan gum, which belong to Group C, more preferably at least gellan gum, and even more preferably both gellan gum and xanthan gum, in combination with the thickening agents of Groups A and B.

When both gellan gum and xanthan gum are used as Group C thickening agents, the mass ratio of gellan gum to xanthan gum, gellan gum : xanthan gum, preferably ranges from 50:50 to 99:1, more preferably 75:25 to 95:5. The proportion of the thickening agent(s) of Group C in the total thickening agents in the composition is preferably 1 to 25 mass%, more preferably 1 to 20 mass%.

Accordingly, the most preferred thickening agent system in the baking composition includes propylene glycol alginate ester, methyl cellulose, hydroxypropylmethyl cellulose, gellan gum, and xanthan gum.

The baking composition may further contain other thickening agents in addition to those belonging to Groups A, B, and C. The proportion of the other thickening agents in total, if any, in the total thickening agents is preferably up to 20 mass%, more preferably 10 mass% or less. The lower limit of the proportion of the other thickening agents in the total thickening agents is 0 mass%.

### <Water>

The baking composition preferably contains water.

As used herein, "water" refers to both added water, such as tap water or mineral water, and the water and moisture contents present in the aforementioned complexes and thickening agents and other materials that can be used to make up the composition, which will be described later.

The water content of the baking composition is preferably 50.0 to 98.9 mass%, more preferably 60.0 to 98.0 mass%, and even more preferably 70.0 to 95.0 mass%. The water content of the baking composition refers to the sum of the added water and the water and moisture contents present in the aforementioned complexes and thickening agents and other materials that make up the composition, which will be described later.

The water content of the baking composition can be determined by any known method, including the oven drying method at atmospheric pressure.

### <Fat and/or Oil>

The baking composition preferably contains fat and/or oil (hereinafter "fat/oil"). Incorporating fat/oil is advantageous in that: fat/oil makes the thickening agent easier to disperse in the composition, easily making the composition homogeneous; the complex and thickening agent contained in the composition can be more uniformly incorporated into bakery dough, thereby enhancing the effects of the invention; and, notably, when used as an egg substitute, the composition enables reduction or elimination of egg usage while achieving these effects.

Any edible fats and oils can be used in the invention without particular limitation. Usable fats and oils include vegetable fats and oils, such as palm oil, palm kernel oil, coconut oil, corn oil, cotton seed oil, soybean oil, rapeseed oil, high-erucic acid rapeseed oil, rice oil, sunflower oil, high oleic sunflower oil, safflower oil, high oleic safflower oil, olive oil, sesame oil, peanut oil, perilla oil, linseed oil, kapok oil, evening primrose oil, mustard oil, cacao butter, sea butter, sal butter, and illippe butter; animal fats and oils, such as milk fat, beef tallow, lard, fish oil, whale oil, butter, and butter oil; and processed fats and oils obtained from these vegetable and animal fats and oils by hydrogenation, fractionation, or interesterification, or a combination thereof. The composition can contain one or more of these fats and oils. It is preferable to use vegetable fat/oil to allow for the production of food products suitable for vegetarians and vegans.

To effectively leverage the above-mentioned advantages of incorporating fat/oil, the fat/oil content in the composition is preferably at least 0.1 mass%, more preferably 1.0 mass% or more, and even more preferably 5.0 mass% or more. To maintain the physical properties of the composition suitable for use as an egg substitute, the fat/oil content in the composition is preferably not more than 20.0 mass%, more preferably 18.0 mass% or less, and even more preferably 15.0 mass% or less.

As used herein, the "fat/oil content" of the composition refers to the total amount of the added fat/oil and the fat/oil contents inherently present in the complex of the invention and other materials that can be used to make up the composition, which are described below.

### <Other Materials>

The baking composition of the invention may contain other materials in addition to the complexes, thickening agents, water, and fat/oil described above.

Examples of the other materials include foodstuffs, food products, and food additives, such as emulsifying agents, saccharides, sugar alcohols, high-intensity sweeteners, proteins, edible salt, inorganic salts, organic acid salts, enzymes, flavorings, acidulants, bitterants, taste components, colorings, preservatives, antioxidants, pH adjusters, spices, spice extracts, herbs, dextrins, coffee, cocoa mass, cocoa powder, vegetables, fruits, legumes, cereals, fish, meat, shellfish, and processed vegetables, fruits, legumes, cereals, fish, meat, and shellfish. These materials can be used either individually or in combination of two or more thereof.

The term "proteins" as one of the other materials refers to the proteins that do not participate in the formation of the lipid-protein complex, or in other words, that term does not encompass the protein forming the lipid-protein complex.

Examples of the proteins that can be used in the composition include plant proteins, such as wheat, soybean, pea, fava bean, mung bean, chickpea, lentil, rice, and algae proteins; animal proteins, such as egg and milk proteins; and microbial proteins. Foodstuffs containing such proteins may also be used as proteins.

When protein is incorporated into the baking composition, vegetable proteins are preferred.

The amounts of the other materials in the composition are not particularly limited as long as the effects of the invention are not impaired. The total content of the other materials in the composition is preferably 20 mass% or less, more preferably 15 mass% or less, and even more preferably 10 mass% or less, with the lower limit being 0 mass%.

### <Physical Form>

The physical form of the composition is not particularly limited, including solid forms, such as powder and granules, flowable forms such as liquid and paste, and gel.

To facilitate incorporation into bakery products and ensure the effects of the invention, a flowable form, such as liquid or gel, and a paste form are preferred.

When the composition contains water and fat/oil, the composition is preferably in emulsion form. The emulsion form is not limited, including those with an aqueous continuous phase, such as oil-in-water or water-in-oil-in-water, and those with an oily continuous phase, such as water-in-oil, oil-in-water-in-oil, and oil-in-oil. The composition is preferably in emulsion form with an aqueous continuous phase.

### <Application>

The composition of the invention exhibits the effect of enabling the production of bakery products with high volume, an airy, fine crumb structure, and a soft texture and is therefore applicable to bakery products such as breads and baked confectionery products, suitably to baked confectionery products. The bakery products to which the composition is applicable will be described later.

The composition of the invention is particularly useful as an egg substitute composition for bakery products. The composition used as an egg substitute composition allows for reducing egg usage or eliminating the need for egg while enabling the production of bakery products with high volume, an airy, fine crumb structure, and a soft texture.

When used as an egg substitute composition for bakery products, the composition of the invention may be used as a substitute for whole egg, albumen, or yolk. However, it is preferably used as a substitute for whole egg or albumen.

### <Method for Producing Baking Composition>

The method for producing the baking composition (hereinafter "the production method") is not particularly limited, provided that a composition containing a lipid-protein complex and a thickening agent is obtained in which the content of the thickening agent is 0.01 to 1.0 parts by mass per part by mass of the solids of the lipid-protein complex. To facilitate producing the baking composition with homogeneity, thereby achieving the effects of the composition more successfully, the method preferably includes Step 1 below:
(Step 1) homogenizing a liquid mixture containing a lipid and a protein to form a lipid-protein complex.

The method including Step 1 according to a preferred embodiment of the method is described below.

In the production method according to the preferred embodiment of the invention, Step 1 is first carried out.

Step 1 is the step of homogenizing a liquid mixture containing a lipid and a protein to form a lipid-protein complex.

Specifically, a lipid, a protein, and, if necessary, other materials for the composition are added to water, followed by mixing, to provide a liquid mixture containing the lipid and the protein.

The liquid mixture containing the lipid and the protein is then homogenized to form a lipid-protein complex. In that case, the lipid-protein complex to be obtained is contained in the liquid mixture. The resulting liquid mixture containing the lipid-protein complex may be lyophilized, spray-dried, or otherwise converted to a solid (e.g., powder or granules) or gel.

Alternatively, in Step 1, homogenization and emulsification processes may be carried out simultaneously. In that case, an aqueous phase containing a lipid and an oily phase containing a protein are provided, or an aqueous phase containing a protein and an oily phase containing a lipid are provided; and the provided two phases are mixed to form a liquid mixture, which is then homogenized and emulsified.

The homogenization process can be performed using, for example, high-shear emulsifiers (e.g., cheese processing kettles and Stephan-type mixers), high-shear mixers (e.g., Comitrol and Masscolloider), static mixers, in-line mixers, homogenizers, colloid mills, and dispersion mills. A two-stage homogenizer may also be used.

The homogenizing pressure is not limited and can be set as desired. For example, when a two-stage homogenizer is employed, homogenization can be carried out at a pressure of 3 to 100 MPa in the first stage and 0 to 5 MPa in the second stage. When the homogenization process is performed in a single stage, the homogenizing pressure can be, for example, 0 to 100 MPa.

Subsequently, the lipid-protein complex and a thickening agent are mixed in a ratio that results in a thickening agent content of 0.01 to 0.1 parts by mass per part by mass of the solids of the lipid-protein complex, thereby producing the baking composition of the invention.

The timing of incorporating the thickening agent into the liquid mixture is arbitrary in the production method, provided that the final baking composition contains the thickening agent in an amount of 0.01 to 0.1 parts by mass per part by mass of the solids of the lipid-protein complex. For instance, the thickening agent may be added to the liquid mixture before homogenization, which contains the lipid and protein, or the liquid mixture after homogenization. These two methods of addition can be combined appropriately.

The resulting baking composition of the invention may be mixed with water to make it liquid or paste, or it may be lyophilized, spray-dried, or otherwise converted to a solid (e.g., powder or granules) or gel.

The resulting composition may undergo disinfection or sterilization or both and may be stored cold or frozen.

The conditions for the disinfection and sterilization processes are outlined as follows. For example, the heating temperature is preferably 60° to 160°C, more preferably 100° to 150°C, and even more preferably 125° to 150°C. The heating time may vary according to the temperature but is preferably 2 seconds to 120 minutes, more preferably 5 seconds to 3 minutes, and even more preferably 5 to 15 seconds, for example.

The disinfection or sterilization process can be achieved by direct heating (e.g., steam injection, infusion, or microwaves), or indirect heating (e.g., batch, plate, tubular, or scraped-surface systems). These treatments can be performed using UHT, HTST, LTLT, batch processing, retorting, microwave heating, open-fire heating, or the like.

The temperature for cold storage is not limited but is preferably 0° to 15°C, for example. The temperature for frozen storage is not limited, but is preferably -80° to lower than 0°C, more preferably -25° to -2°C, for example.

### [Bakery Dough]

The bakery dough of the invention contains a lipid-protein complex and a thickening agent, and the content of the thickening agent in the bakery dough is 0.01 to 0.1 parts by mass per part by mass of the solids of the lipid-protein complex (the terms "bakery dough" and simply "dough" as used herein also encompass "batter"). Preferably, the bakery dough of the invention contains the baking composition of the invention. The preferred embodiments of the lipid-protein complex and thickening agent contained in the bakery dough of the invention are as described above.

The bakery dough of the invention includes dough for breads, such as white bread loaves, sweet buns, variety breads, butter rolls, soft rolls, hard rolls, sweet rolls, Danishes, pastries, French breads, and yeast-raised doughnuts; and for baked confectionery products, such as choux shells, pies, cake doughnuts, butter cakes, and sponge cakes (including chiffon cakes), pancakes, cookies or biscuits, waffles, scones, crapes, castella, and dorayaki (sweet red bean pancakes). The bakery dough of the invention is preferably for baked confectionery products, particularly butter cakes and sponge cakes.

The lipid-protein complex content of the bakery dough may vary depending on the type of the dough and can be adjusted accordingly; however, the content is preferably 1 to 40 parts by mass, more preferably 3 to 30 parts, and even more preferably 5 to 25 parts, on a solids basis per 100 parts by mass of the flour contained in the dough.

The phrase "100 parts by mass of the flour" as used herein does not include the amounts of flours, if any, in the baking composition, hereinafter the same.

The term "flour" as used herein includes wheat flours, such as strong, semi-strong (intermediate between strong and all-purpose), all-purpose, weak, Durum, whole wheat, germ, and bran flour; rye flour, whole rye flour, barley flour, rice flour, soybean flour, Job's tears flour, and oat flour. These flours can be used either individually or in combination of two or more thereof.

From the perspective that the effects of the baking composition of the invention are more easily and successfully achieved, it is preferable to use one or more selected from the group consisting of wheat flours, rice flour, and soybean flour to make the bakery dough.

The thickening agent content in the bakery dough of the invention may vary depending on the type of the dough and can be adjusted accordingly. It is preferably 0.1 to 15.0 parts by mass, more preferably 0.3 to 12.0 parts, and even more preferably 0.5 to 10.0 parts, per 100 parts by mass of the flour contained in the dough.

When the bakery dough contains the baking composition of the invention, the content of the composition in the dough may vary according to the type of the dough and can be adjusted accordingly. The content of the composition in the dough is preferably adjusted so that the amounts of the complex and the thickening agent in the dough may fall within the respective preferred ranges described above.

In a preferred embodiment of the bakery dough, the content of the baking composition in the dough is preferably 2 to 50 parts by mass, more preferably 5 to 40 parts, and even more preferably 8 to 30 parts, on a solids basis per 100 parts by mass of the flour in the dough.

While the bakery dough of the invention may contain egg, the composition of the invention is preferably used as an egg substitute composition. Therefore, the bakery dough achieves reduction or elimination of egg usage while enabling the production of high-volume bakery products with an airy, fine crumb structure and a soft texture.

When the dough contains egg, the egg content of the dough may vary depending on the type of the dough. For baked confectionery products, particularly sponge cakes, for example, the egg content is preferably more than 0 and to 160 parts by mass, more preferably 20 to 140 parts, and even more preferably 50 to 120 parts, per 100 parts by mass of the flour contained in the dough. As used herein, the term "egg content" refers to the total amount of added egg, including whole egg, albumen, and yolk, and their processed products, as well as the egg contents, if any present, in other materials (described below) that constitute the bakery dough.

The bakery products of the invention which contain a reduced amount of egg or no eggs preferably have an egg content reduced by 10 to 100 mass%, more preferably 20 to 100 mass%, and even more preferably 30 to 100 mass%, relative to the egg content of ordinary bakery products.

If desired, the bakery dough may contain other materials commonly used in bakery dough in addition to the aforementioned complex, thickening agent, baking composition, and egg.

The other materials that can be used in the dough include water, fats and oils, yeast, saccharides, sugar alcohols, high-intensity sweeteners, proteins, colorings, antioxidants, milk and dairy products, cheeses, distilled liquors, fermented alcoholic beverages, various liqueurs, emulsifying agents, enzymes, leavening agents, inorganic salts, edible salt, baking powder, yeast nutrients, cacao, cacao products, coffee, coffee products, herbs, preservatives, bitterants, acidulants, pH adjusters, shelf-life improvers, fruits, fruit juices, jams, fruit sauces, seasonings, spices, flavorings, and other foodstuffs and additives. These additional materials can be used either individually or in combination of two or more thereof.

The water content of the bakery dough may vary depending on the type of the dough. For baked confectionery products, for instance, the water content of the bakery dough is preferably 10 to 500 parts by mass, more preferably 50 to 400 parts, of water per 100 parts by mass of the flour.

The term "water content" of the bakery dough refers to the total amount of added water, such as tap water or mineral water, and the water and moisture contents present in the aforementioned complex, thickening agent, baking composition, and other materials (except water) added to make the dough.

As long as the effects of the invention are not impaired, the total content of the other materials used to make the dough, except water, can be adjusted as appropriate. For instance, the total content of the other materials is preferably 300 parts or less by mass, and more preferably 200 parts or less, per 100 parts by mass of the flour contained in the dough, with a lower limit of 0 parts by mass.

The method of the preparation of the bakery dough of the invention is not limited, and any known method for preparing bakery dough can be employed, provided that the final dough contains the lipid-protein complex and the thickening agent in an amount of 0.01 to 1.0 parts by mass per part by mass of the solids of the complex. To facilitate preparing the dough that satisfies the above conditions and incorporating the complex and thickening agent uniformly into the dough, thereby achieving the effects of the invention more easily and successfully, the dough is preferably prepared by incorporating the baking composition of the invention into bakery dough.

Methods of the preparation of the dough include those for bread, such as the sponge and dough method, straight dough method, liquid sponge method, *chumen* method (delayed yeast addition method), and yudane method; and those for baked confectionery products, such as the sugar-batter method, flour-batter method, all-in-mix method, whole-egg foaming method, and separated-egg foaming method. These dough preparation methods may be used in combination.

When the baking composition of the invention is incorporated into the bakery dough, the method for the incorporation is not particularly limited. For example, the composition may be mixed with all the other ingredients used to make up the dough, or the composition may be added to the prepared dough. When the dough is prepared according to the sponge and dough method, the composition of the invention may be incorporated into the sponge or the final dough, or both.

The resulting bakery dough may be stored cold or frozen.

### [Bakery Product]

The bakery product of the invention is obtained by heat-processing the bakery dough of the invention.

The bakery product of the invention is characterized by its high volume, an airy, fine crumb structure, and a soft texture. The bakery product is also characterized by enabling the reduction or elimination of egg usage while achieving the abovementioned qualities.

The bakery products of the invention include breads produced by heat-processing the abovementioned dough for bread and baked confectionery products produced by heat-processing the abovementioned dough for baked confectionery products. Baked confectionery products are preferred among these products for achieving more reliable effects on volume, crumb structure, and texture. Among others, butter cakes and sponge cakes are more preferred.

The heating process for producing the bakery products is performed by commonly employed cooking processes, including baking, frying, steaming, pot-roasting, and microwave cooking, and a combination thereof. For the heating process for producing the bakery products, baking is preferred among these.

The heating conditions are selected from those commonly used, while varying depending on the type of bakery products to be obtained and the employed heating process. For instance, baking can be carried out at 100° to 250°C for 5 to 60 minutes.

The resulting bakery product can be stored cold or frozen. The cold or frozen stored bakery product can be reheated.

### [Method for Egg Substitution in Bakery Products]

The method of the invention for egg substitution in bakery products, hereinafter "the egg substitution method", includes incorporating a baking composition into bakery dough. The baking composition contains a lipid-protein complex and a thickening agent and has a content of the thickening agent of 0.01 to 1.0 parts by mass per part by mass of the solids of the lipid-protein complex.

The egg substitution method of the invention enables the provision of high-volume bakery products with an airy, fine crumb structure, and a soft texture, while reducing or eliminating egg usage.

The details of the lipid-protein complex, thickening agent, and baking composition that are used in the egg substitution method are as described hereinabove. The bakery dough and bakery product that are obtained by the egg substitution method are also as described above. The baking composition content in the bakery dough and other conditions used in the egg substitution method are also as described above.

### Examples

The invention will now be illustrated in greater detail by way of Examples, but it should be understood that the invention is not limited thereto. Unless otherwise specified, all the percentages and parts are given by mass, and the units of the figures in the formulations shown in Tables 1 to 3, 5, 6, 8, and 9 are part by mass. The following abbreviations are used in Tables: "Compsn." for Composition and "L-P" for Lipid-Protein.

### [Ingredients used in Examples]

<fava bean protein>
   Orprotein FP-AC available from Organo Food-Tech Co., Ltd.; protein content, 84.0%; lipid content, 5.0%; moisture content, 6%
<mung bean protein>
   Orprotein MP-AC from Organo Food-Tech; protein content, 75.0%; lipid content, 6.0%; moisture content: 7%
<soybean protein>
   protein content, 86.3%; lipid content, 0.2%; moisture content, 5%
<pea protein>
   protein content, 81.0%; lipid content, 8.0%; moisture content, 5%
<lentil protein>
   protein content, 79.1%; lipid content, 7.1%; moisture content, 7%
<chlorella protein>
   protein content, 65.6%; lipid content, 7.0%; moisture content, 5%
<soybean lecithin>
   lipid content, 99%; phospholipid content in lipid, 90%; moisture content, 1%; in powder form
<propylene glycol alginate ester>
   KONBUSAN 501 from Kimica Corp.; moisture content, 10%
<methyl cellulose>
   MCE-15 from Shin-Etsu Chemical Co., Ltd.; moisture content, 5%
<hydroxypropylmethyl cellulose>
   SE-50 from Shin-Etsu Chemical; moisture content, 5%
<gellan gum>
   Kelco Gel HM from MP Gokyo Food & Chemical Co., Ltd.; moisture content, 8%
<xanthan gum>
   Echo Gum from MP Gokyo Food & Chemical; moisture content, 12%

### [Preparation of Lipid-Protein Complex]

Lipid-protein complexes were prepared according to the formulations in Table 1.

Specifically, fava bean protein or mung bean protein was thoroughly dispersed in water warmed to 60°C by stirring. Soybean lecithin was then added to the dispersion, and the resultant was sufficiently stirred to thoroughly disperse and emulsify the soybean lecithin in the dispersion. The resulting mixture was homogenized in a valve type homogenizer at 30 MPa to form a lipid-protein complex. The complex prepared was sterilized in a VTIS system at 141°C for 8 seconds and cooled to 5°C to yield lipid-protein complexes (1) and (2), which were liquid.

**Table 1**

| | | Lipid-Protein Complex (1) | Lipid-Protein Complex (2) |
|---|---|---|---|
| Lipid | Soybean Lecithin | 10 | 10 |
| Protein | Fava Bean Protein | 10 | |
| | Mung Bean Protein | | 10 |
| Water | | 80 | 80 |

### [Evaluation 1]

The effects of the type of the lipid-protein complex and the presence or absence of the lipid-protein complex and thickening agent in baking compositions on the qualities of bakery products were evaluated.

### <Preparation of Baking Composition>

Baking compositions (1-1) through (1-9) were prepared according to the formulations in Table 2.

Specifically, for the preparation of baking compositions (1-1) and (1-2), the lipid-protein complex and the thickening agents were added to and mixed with water, and the resultant was homogenized to form a composition. For baking composition (1-3), the thickening agents were added to and mixed with water, and the resultant was homogenized to form a composition. For baking composition (1-4), the lipid-protein complex was added to water and mixed with water, and the resultant was homogenized to form a composition. The resulting compositions were each sterilized in a VTIS system at 141°C for 4 seconds, and cooled to 5°C to yield baking compositions (1-1) through (1-4), which were viscous liquids.

For baking compositions (1-5) through (1-9), the protein, soybean lecithin, and thickening agents were added to and mixed with water, and the resultant was homogenized to form aqueous solutions each containing a lipid-protein complex. These solutions were sterilized in a VTIS system at 141°C for 8 seconds and cooled to 5°C to yield baking compositions (1-5) through (1-9), which were viscous liquids. Baking compositions (1-1), (1-2) and (1-5) to (1-9) correspond to the baking composition of the invention.

**Table 2**

| | | | Baking Compsn. (1-1) | Baking Compsn. (1-2) | Baking Compsn. (1-3) | Baking Compsn. (1-4) | Baking Compsn. (1-5) |
|---|---|---|---|---|---|---|---|
| Type of L-P Complex | | | (1) | (2) | - | (1) | - |
| | L-P Complex | | 46.95 | 46.95 | | 80 | |
| | Fava Bean Protein | | | | | | 4.7 |
| | Soybean Protein | | | | | | |
| | Pea Protein | | | | | | |
| | Lentil Protein | | | | | | |
| | Chlorella Protein | | | | | | |
| | Soybean Lecithin | | | | | | 4.7 |
| Thickening Agent | | Propylene Glycol Alginate Ester | 0.39 | 0.39 | 0.39 | | 0.39 |
| | | Methyl Cellulose | 0.39 | 0.39 | 0.39 | | 0.39 |
| | | Hydroxymethyl Cellulose | 0.19 | 0.19 | 0.19 | | 0.19 |
| | | Gellan Gum | 0.13 | 0.13 | 0.13 | | 0.13 |
| | | Xanthan Gum | 0.01 | 0.01 | 0.01 | | 0.01 |
| Water | | | 51.94 | 51.94 | 98.89 | 20 | 89.49 |
| L-P Complex Content (solids) (%) | | | 9.4 | 9.4 | 0 | 16.0 | 9.4 |
| Thickening Agent Content (%) | | | 1.1 | 1.1 | 1.1 | 0 | 1.1 |
| Water Content (%) | | | 89.9 | 90.0 | 99.0 | 84.6 | 89.9 |
| Thickening Agent/L-P Solids (part) | | | 0.12 | 0.12 | - | 0 | 0.12 |
| Group A/Total Thickening Agents (%) | | | 35.1 | 35.1 | 35.1 | - | 35.1 |
| Group B/Total Thickening Agents (%) | | | 52.3 | 52.3 | 52.3 | - | 52.3 |
| Group C/Total Thickening Agents (%) | | | 12.6 | 12.6 | 12.6 | - | 12.6 |

| | | | Baking Compsn. (1-6) | Baking Compsn. (1-7) | Baking Compsn. (1-8) | Baking Compsn. (1-9) |
|---|---|---|---|---|---|---|
| Type of L-P Complex | | | | | | |
| | L-P Complex | | | | | |
| | Fava Bean Protein | | | | | |
| | Soybean Protein | | 3.5 | | | |
| | Pea Protein | | | 3.5 | | |
| | Lentil Protein | | | | 3.5 | |
| | Chlorella Protein | | | | | 4.5 |
| | Soybean Lecithin | | 1.2 | 1.2 | 1.2 | 1.2 |
| Thickening Agent | | Propylene Glycol Alginate Ester | 0.39 | 0.39 | 0.39 | 0.39 |
| | | Methyl Cellulose | 0.39 | 0.39 | 0.39 | 0.39 |
| | | Hydroxymethyl Cellulose | 0.19 | 0.19 | 0.19 | 0.19 |
| | | Gellan Gum | 0.13 | 0.13 | 0.13 | 0.13 |
| | | Xanthan Gum | 0.01 | 0.01 | 0.01 | 0.01 |
| | | Water | 94.19 | 94.19 | 94.19 | 93.19 |
| L-P Complex Content (solids) (%) | | | 4.5 | 4.5 | 4.4 | 5.5 |
| Thickening Agent Content (%) | | | 1.1 | 1.1 | 1.1 | 1.1 |
| Water Content (%) | | | 94.5 | 94.5 | 94.5 | 94.5 |
| Thickening Agent/L-P Solids (part) | | | 0.25 | 0.25 | 0.25 | 0.20 |
| Group A/Total Thickening Agents (%) | | | 35.1 | 35.1 | 35.1 | 35.1 |
| Group B/Total Thickening Agents (%) | | | 52.3 | 52.3 | 52.3 | 52.3 |
| Group C/Total Thickening Agents (%) | | | 12.6 | 12.6 | 12.6 | 12.6 |

### <Production of Sponge Cakes>

Sponge cakes of Examples 1 to 7 and Comparative Examples 1 to 3 were produced according to the formulations in Table 3. An ordinary sponge cake and an egg-free sponge cake were made as Control and Reference Example, respectively.

Specifically, the dough for the control sponge cake was prepared as follows. Whole eggs were placed in a bowl, and sugar and the foamable emulsifying fat for cake (Torte from ADEKA Corp., which was also used in the other Examples) were added thereto, followed by whipping with a whisk. Heat-molten margarine was added to the foam and mixed therein. Previously mixed and sieved weak flour and baking powder were added and mixed therewith to prepare dough for control sponge cake.

The dough for the reference sponge cake was prepared in the same manner as for the control sponge cake, except for replacing the whole eggs with water and replacing the weak flour with rice flour and soybean flour.

The dough for the sponge cakes of Examples 1 to 7 and Comparative Examples 1 to 3 was prepared in the same manner as for the control sponge cake, except for replacing the whole eggs with the baking composition and replacing the weak flour with rice flour and soybean flour.

Each dough was poured into a 15-cm-diameter round cake mold. The dough was then baked in an oven at 170°C for 35 minutes, and allowed to cool to room temperature (approximately 20°C) to make sponge cakes of Control, Reference Example, Examples 1 to 7, and Comparative Examples 1 to 3. The sponge cakes of Reference Example, Examples 1 to 7, and Comparative Examples 1 to 3 are free of eggs. The sponge cakes of Examples 1 to 7 correspond to the bakery product of the invention.

**Table 3**

| | Control | Ref. Example | Example 1 | Example 2 | Comp. Example 1 | Comp. Example 2 |
|---|---|---|---|---|---|---|
| Type of Baking Composition | - | - | (1-1) | (1-2) | (1-3) | (1-4) |
| Baking Composition | | | 388 | 388 | 388 | 388 |
| Fava Bean Protein | | | | | | |
| Soybean Lecithin | | | | | | |
| Whole Egg | 360 | | | | | |
| Water | | 360 | | | | |
| Sugar | 200 | 136 | 136 | 136 | 136 | 136 |
| Foamable Emulsifying Fat for Cake | 30 | 39 | 39 | 39 | 39 | 39 |
| Margarine | 30 | 30 | 30 | 30 | 30 | 30 |
| Weak Flour | 200 | | | | | |
| Rice Flour | | 210 | 210 | 210 | 210 | 210 |
| Soybean Flour | | 15 | 15 | 15 | 15 | 15 |
| Baking Powder | 2 | 3 | 3 | 3 | 3 | 3 |
| L-P Complex (part)/100 parts of Flour | - | - | 16.2 | 16.2 | 0 | 16.2 |
| Thickening Agent (part)/100 parts of Flour | - | - | 9.7 | 9.7 | 9.7 | 0 |

| | Example 3 | Example 4 | Example 5 | Example 6 | Example 7 | Comp. Example 3 |
|---|---|---|---|---|---|---|
| Type of Baking Composition | (1-5) | (1-6) | (1-7) | (1-8) | (1-9) | (1-3) |
| Baking Composition | 388 | 388 | 388 | 388 | 388 | 388 |
| Fava Bean Protein | | | | | | 18 |
| Soybean Lecithin | | | | | | 18 |
| Whole Egg | | | | | | |
| Water | | | | | | |
| Sugar | 136 | 136 | 136 | 136 | 136 | 136 |
| Foamable Emulsifying Fat for Cake | 39 | 39 | 39 | 39 | 39 | 39 |
| Margarine | 30 | 30 | 30 | 30 | 30 | 30 |
| Weak Flour | | | | | | |
| Rice Flour | 210 | 210 | 210 | 210 | 210 | 210 |
| Soybean Flour | 15 | 15 | 15 | 15 | 15 | 15 |
| Baking Powder | 3 | 3 | 3 | 3 | 3 | 3 |
| L-P Complex (part)/100 parts of Flour | 16.2 | 7.8 | 7.8 | 7.7 | 9.4 | 0 |
| Thickening Agent (part)/100 parts of Flour | 9.7 | 9.7 | 9.7 | 9.7 | 9.7 | 9.7 |

### Evaluation of Volume, Crumb Structure, and Texture:

The sponge cakes produced in Reference Example, Examples 1 to 7, and Comparative Examples 1 to 3 were evaluated for their volume according to the criteria below.

A cross-section of each sponge cake of Control, Reference Example, Examples 1 to 7, and Comparative Examples 1 to 3 was visually inspected to evaluate the crumb structure according to the criteria below.

Then, each sponge cake was served to a panel of five experts, who scored the texture based on the scoring criteria below. The texture was rated based on the total score given by the panel. Prior to this sensory test, the evaluation scale corresponding to each score was standardized to ensure consistency in the evaluation criteria among the panelists. The sponge cakes that received a rating of B or higher in all of volume, crumb structure, and texture were considered a pass. The results of Evaluation 1 are shown in Table 4.
Volume Evaluation Criteria:
   A+: Higher than the control
   A: Equal to or slightly higher than the control
   B+: Marginally lower than, yet comparable to, the control
   B: Slightly lower than the control, but acceptable
   C: Lower than the control
   D: Much lower than the control
Crumb Structure Evaluation Criteria:
   A: Very good - airy (not dense at all) with fine cells
   B+: Good - very limited dense portions, with fine cells
   B: Fair - several dense portions, yet acceptable, with fine cells
   C: Poor - slightly dense structure
   D: Very poor - dense structure
Texture scoring Criteria:
   3: Good - very soft
   2: Fair - soft
   1: Slightly poor - slightly firm
   0: Poor - firm
Texture Evaluation Rating:
   A: Total score of 14-15 points
   B+: Total score of 12-13 points
   B: Total score of 9-11 points
   C: Total score of 5-8 points
   D: Total score of 0-4 points

**Table 4**

| | Control | Ref. Example | Example 1 | Example 2 | Comparative Example 1 | Comparative Example 2 |
|---|---|---|---|---|---|---|
| Volume | - | D | B | B | D | C |
| Crumb Structure | A | D | A | A | D | D |
| Texture | A | D | B+ | B+ | D | D |

| | Example 3 | Example 4 | Example 5 | Example 6 | Example 7 | Comparative Example 3 |
|---|---|---|---|---|---|---|
| Volume | B | B+ | B | A | B | C |
| Crumb Structure | A | A | B | A | A | D |
| Texture | B+ | B+ | B+ | A | A | D |

The sponge cake of Reference Example, which contained no eggs, lacked volume and had a poor crumb structure with a dense bottom area and a firm texture.

In contrast, all of the sponge cakes of Examples 1 through 7, which used the baking composition of the invention, had high volume, a good crumb structure, and a soft texture. The sponge cakes of Examples 1 and 2, which differed in the type of protein in their lipid-protein complexes, both received satisfactory ratings with minor differences of evaluation results. In Examples 3 to 7, where the previously prepared lipid-protein complex was not used; instead, the complex was formed in situ by mixing the lipid and protein together with the other materials making up the baking composition of the invention and homogenizing the mixture, the sponge cakes were rated satisfactory irrespective of the type of protein used. Those of Examples 4, 6, and 7 were particularly excellent.

On the other hand, the sponge cakes of Comparative Examples 1 and 2, which used baking compositions that did not contain the lipid-protein complex and the thickening agent, respectively, lacked volume and had a dense crumb and a firm texture. In Comparative Example 3, in which the dough simply contained the lipid and the protein as they were, not in the form of a complex, the effects of the invention were not achieved.

### [Evaluation 2]

The effects of the type of the thickening agent used in the baking composition on the qualities of bakery products were evaluated.

### <Preparation of Baking Composition>

Baking compositions (2-1) through (2-5) were prepared according to the formulations in Table 5.

Specifically, the lipid-protein complex (1) and the thickening agents were added to and mixed with water, and the resultant was homogenized to form a composition. The resulting composition was sterilized in a VTIS system at 141°C for 4 seconds and cooled to 5°C to yield baking compositions (2-1) through (2-5), which were viscous liquids. The baking compositions (2-1) to (2-5) correspond to the baking composition of the invention.

**Table 5**

| | | Baking Compsn. (2-1) | Baking Compsn. (2-2) | Baking Compsn. (2-3) | Baking Compsn. (2-4) | Baking Compsn. (2-5) |
|---|---|---|---|---|---|---|
| L-P Complex (1) | | 46.95 | 46.95 | 46.95 | 46.95 | 46.95 |
| Thickening Agent | Propylene Glycol Alginate Ester | | 0.39 | 0.39 | 0.39 | 0.39 |
| | Methyl Cellulose | 0.39 | | 0.39 | 0.39 | 0.39 |
| | Hydroxymethyl Cellulose | 0.19 | 0.19 | | 0.19 | 0.19 |
| | Gellan Gum | 0.13 | 0.13 | 0.13 | | 0.13 |
| | Xanthan Gum | 0.01 | 0.01 | 0.01 | 0.01 | |
| Water | | 52.33 | 52.33 | 52.13 | 52.07 | 51.95 |
| L-P Complex Content (solids) (%) | | 9.4 | 9.4 | 9.4 | 9.4 | 9.4 |
| Thickening Agent Content (%) | | 0.7 | 0.7 | 0.9 | 1.0 | 1.1 |
| Water Content (%) | | 90.3 | 90.3 | 90.1 | 90.0 | 89.9 |
| Thickening Agent/L-P Solids (part) | | 0.08 | 0.08 | 0.10 | 0.10 | 0.12 |
| Group A/Total Thickening Agents (%) | | 0 | 54.2 | 42.4 | 39.8 | 35.5 |
| Group B/Total Thickening Agents (%) | | 80.6 | 26.4 | 42.4 | 59.2 | 52.7 |
| Group C/Total Thickening Agents (%) | | 19.4 | 19.4 | 15.2 | 1.0 | 11.8 |

### Production of Sponge Cakes:

Sponge cakes of Examples 8 to 12 were made in the same manner as in Evaluation 1, except for using the formulations shown in Table 6 in place of the formulations in Table 3. The sponge cakes of Examples 8 to 12 are free of eggs and correspond to the bakery products of the invention.

**Table 6**

| | Example 8 | Example 9 | Example 10 | Example 11 | Example 12 |
|---|---|---|---|---|---|
| Type of Baking Composition | (2-1) | (2-2) | (2-3) | (2-4) | (2-5) |
| Baking Composition | 388 | 388 | 388 | 388 | 388 |
| Sugar | 136 | 136 | 136 | 136 | 136 |
| Foamable Emulsifying Fat for Cake | 39 | 39 | 39 | 39 | 39 |
| Rice Flour | 210 | 210 | 210 | 210 | 210 |
| Soybean Flour | 15 | 15 | 15 | 15 | 15 |
| Baking Powder | 3 | 3 | 3 | 3 | 3 |
| Margarine | 30 | 30 | 30 | 30 | 30 |
| L-P Complex (part)/100 parts of Flour | 16.2 | 16.2 | 16.2 | 16.2 | 16.2 |
| Thickening Agent (part)/100 parts of Flour | 6.3 | 6.3 | 8.0 | 8.6 | 9.6 |

### <Evaluation of Volume, Crumb Structure, and Texture>

The sponge cakes produced in Examples 8 to 12 were evaluated for their volume, crumb structure, and texture using the same criteria as in Evaluation 1. The sponge cakes that received a rating of B or higher for all of volume, crumb structure, and texture were considered a pass. The results of Evaluation 2 are shown in Table 7.

**Table 7**

| | Example 8 | Example 9 | Example 10 | Example 11 | Example 12 |
|---|---|---|---|---|---|
| Volume | B | B | B | B | B |
| Crumb Structure | B | B+ | B+ | B | B+ |
| Texture | B | B | B | B+ | B+ |

The baking compositions used in Examples 8 through 12 had the same formulation as the baking composition used in Example 1, except that, in each of Examples 8 to 12, a different one of the five thickening agents was omitted. Every sponge cake produced in Examples 8 to 12 was satisfactory in terms of volume, crumb structure, and texture. In particular, the sponge cake of Example 12, in which xanthan gum was omitted, was good sponge cake nearly equivalent to that of Example 1. The sponge cake of Example 8, in which propylene glycol alginate ester was omitted, had the lowest volume of the other cakes under Evaluation 2, exhibited slightly dense areas in the crumb and a slightly firm texture, but was still acceptable.

### [Evaluation 3]

The effects produced by a baking composition in the form of a fat/oil composition were investigated.

### <Preparation of Baking Compositions>

Baking compositions (3-1) to (3-7) were prepared according to the formulations shown in Table 8.

Specifically, for the baking compositions (3-1) and (3-2), the lipid-protein complex (1) was added to and mixed with water to form an aqueous phase. The thickening agents were added to and mixed with rapeseed oil to prepare an oily phase. The oily phase was added to the aqueous phase, followed by mixing, and the mixture was emulsified and homogenized to form an emulsion. The emulsion was sterilized in a VTIS system at 141°C for 4 seconds and cooled to 5°C to yield baking compositions (3-1) and (3-2) in the form of an oil-in-water emulsion type fat/oil composition, which were viscous liquids.

For the baking compositions (3-3) to (3-7), the protein and soybean lecithin were added to and mixed with water and the mixture was homogenized to form an aqueous phase containing a lipid-protein complex. The thickening agents were added to and mixed with rapeseed oil to prepare an oily phase. The oily phase was added to the aqueous phase, and the mixture was emulsified and homogenized to form an emulsion. The emulsion was sterilized in a VTIS system at 141°C for 4 seconds and cooled to 5°C to yield baking compositions (3-3) to (3-7) in the form of an oil-in-water emulsion type fat/oil composition, which were viscous liquids. The baking compositions (3-1) through (3-7) correspond to the baking composition of the invention.

**Table 8**

| | | | Baking Compsn. (3-1) | Baking Compsn. (3-2) | Baking Compsn. (3-3) | Baking Compsn. (3-4) |
|---|---|---|---|---|---|---|
| L-P Complex (1) | | | 46.95 | 46.95 | | |
| | Soybean Protein | | | | 3.5 | |
| | Pea Protein | | | | | 3.5 |
| | Lentil Protein | | | | | |
| | Chlorella Protein | | | | | |
| | Soybean Lecithin | | | | 1.2 | 1.2 |
| Thickening Agent | | Propylene Glycol Alginate Ester | 0.39 | 0.39 | 0.39 | 0.39 |
| | | Methyl Cellulose | 0.39 | 0.39 | 0.39 | 0.39 |
| | | Hydroxymethyl Cellulose | 0.19 | 0.19 | 0.19 | 0.19 |
| | | Gellan Gum | 0.13 | 0.13 | 0.13 | 0.13 |
| | | Xanthan Gum | 0.01 | 0.01 | 0.01 | 0.01 |
| Rapeseed Oil | | | 5 | 10 | 10 | 10 |
| Water | | | 46.94 | 41.94 | 84.19 | 84.19 |
| L-P Complex Content (solids) (%) | | | 9.4 | 9.4 | 4.5 | 4.5 |
| Thickening Agent Content (%) | | | 1.1 | 1.1 | 1.1 | 1.1 |
| Fat/Oil Content (%) | | | 5.0 | 10.0 | 10.0 | 10.0 |
| Water Content (%) | | | 84.9 | 79.9 | 84.5 | 84.5 |
| Thickening Agent/L-P Solid (part) | | | 0.12 | 0.12 | 0.25 | 0.25 |
| Group A/Total Thickening Agents (%) | | | 35.1 | 35.1 | 35.1 | 35.1 |
| Group B/Total Thickening Agents (%) | | | 52.3 | 52.3 | 52.3 | 52.3 |
| Group C/Total Thickening Agents (%) | | | 12.6 | 12.6 | 12.6 | 12.6 |

| | | | Baking Compsn. (3-5) | Baking Compsn. (3-6) | Baking Compsn. (3-7) |
|---|---|---|---|---|---|
| L-P Complex (1) | | | | | |
| | Soybean Protein | | | | 1.75 |
| | Pea Protein | | | | |
| | Lentil Protein | | 3.5 | | |
| | Chlorella Protein | | | 4.5 | 2.25 |
| | Soybean Lecithin | | 1.2 | 1.2 | 1.2 |
| Thickening Agent | | Propylene glycol alginate ester | 0.39 | 0.39 | 0.39 |
| | | Methyl Cellulose | 0.39 | 0.39 | 0.39 |
| | | Hydroxymethyl Cellulose | 0.19 | 0.19 | 0.19 |
| | | Gellan Gum | 0.13 | 0.13 | 0.13 |
| | | Xanthan Gum | 0.01 | 0.01 | 0.01 |
| Rapeseed Oil | | | 10 | 10 | 10 |
| Water | | | 84.19 | 83.19 | 83.69 |
| L-P Complex Content (solids) (%) | | | 4.4 | 5.5 | 5.0 |
| Thickening Agent Content (%) | | | 1.1 | 1.1 | 1.1 |
| Fat/Oil Content (%) | | | 10.0 | 10.0 | 10.0 |
| Water Content (%) | | | 84.5 | 83.5 | 84.0 |
| Thickening Agent/L-P Solid (part) | | | 0.25 | 0.20 | 0.22 |
| Group A/Total Thickening Agents (%) | | | 35.1 | 35.1 | 35.1 |
| Group B/Total Thickening Agents (%) | | | 52.3 | 52.3 | 52.3 |
| Group C/Total Thickening Agents (%) | | | 12.6 | 12.6 | 12.6 |

### <Production of Sponge Cakes>

Sponge cakes of Examples 13 to 19 were produced according to the formulation in Table 9.

Specifically, the baking composition was placed in a bowl, and the foamable emulsifying fat for cake and sugar were added, followed by whipping with a whisk. Previously mixed and sieved rice flour, soybean flour, and baking powder were then added, and the resultant was mixed to prepare sponge cake doughs of Examples 13 through 19.

The resulting dough was poured in a 15-cm-diameter round cake mold, baked in an oven at 170°C for 35 minutes, and allowed to cool to room temperature (approximately 20°C) to make sponge cakes of Examples 13 through 19. These sponge cakes are free of eggs and correspond to the bakery products of the invention.

**Table 9**

| | Example 13 | Example 14 | Example 15 | Example 16 |
|---|---|---|---|---|
| Type of Baking Composition | (3-1) | (3-2) | (3-3) | (3-4) |
| Baking Composition | 388 | 388 | 388 | 388 |
| Sugar | 136 | 136 | 136 | 136 |
| Foamable Emulsifying Fat for Cake | 39 | 39 | 39 | 39 |
| Rice Flour | 210 | 210 | 210 | 210 |
| Soybean Flour | 15 | 15 | 15 | 15 |
| Baking Powder | 3 | 3 | 3 | 3 |
| L-P Complex (part)/100 parts of Flour | 16.2 | 16.2 | 7.8 | 7.8 |
| Thickening Agent (part)/100 parts of Flour | 9.7 | 9.7 | 9.7 | 9.7 |

| | Example 17 | Example 18 | Example 19 |
|---|---|---|---|
| Type of Baking Composition | (3-5) | (3-6) | (3-7) |
| Baking Composition | 388 | 388 | 388 |
| Sugar | 136 | 136 | 136 |
| Foamable Emulsifying Fat for Cake | 39 | 39 | 39 |
| Rice Flour | 210 | 210 | 210 |
| Soybean Flour | 15 | 15 | 15 |
| Baking Powder | 3 | 3 | 3 |
| L-P Complex (part)/100 parts of Flour | 7.7 | 9.4 | 8.6 |
| Thickening Agent (part)/100 parts of Flour | 9.7 | 9.7 | 9.7 |

### <Evaluation of Volume, Crumb Structure, and Texture>

The sponge cakes produced in Examples 13 to 19 were evaluated for their volume, crumb structure, and texture using the same manner and criteria as in Evaluation 1. The sponge cakes that received a rating of B or higher for all of volume, crumb structure, and texture were considered a pass. The results of Evaluation 3 are shown in Table 10.

**Table 10**

| | Example 13 | Example 14 | Example 15 | Example 16 |
|---|---|---|---|---|
| Volume | A | A | A | A |
| Crumb Structure | A | A | A | B |
| Texture | A | A | A | A |

| | Example 17 | Example 18 | Example 19 |
|---|---|---|---|
| Volume | A | A | A+ |
| Crumb Structure | A | A | A |
| Texture | A | A | A |

In Examples 13 and 14, where the baking composition was an oil-in-water emulsion type fat/oil composition containing 5% and 10%, respectively, of fat/oil, the sponge cakes had high volume, an airy, fine crumb structure, and a very soft texture as compared with the sponge cake produced in Example 1, where the baking composition did not contain fat/oil.

The sponge cakes of Examples 15 to 19, which differed in the type of the protein forming the lipid-protein complex in the baking composition, had high volume, an airy, fine crumb structure, and a very soft texture as compared with the one produced in Example 1, where the baking composition did not contain fat/oil. In particular, the sponge cake of Example 19, in which a combination of chlorella and soybean proteins was used to form the lipid-protein complex, was found excellent with the highest volume.

These results prove that the baking composition of the invention which is in the form of a fat/oil composition achieves enhanced effects of the invention.

## Claims

1. A composition for bakery products, comprising
a lipid-protein complex and
a thickening agent,
wherein a content of the thickening agent in the composition is 0.01 to 1.0 parts by mass per part by mass of solids of the lipid-protein complex.

2. The composition of claim 1, wherein the lipid constituting the lipid-protein complex comprises a plant phospholipid.

3. The composition of claim 1 or 2, wherein the thickening agent comprises at least one member selected from the group consisting of alginic acid, alginate salts, propylene glycol alginate ester, guar gum, gellan gum, xanthan gum, methyl cellulose, and hydroxypropylmethyl cellulose.

4. The composition of claim 1 or 2, further comprising water and fat and/or oil and being an emulsion with an aqueous phase as a continuous phase.

5. The composition of claim 1 or 2, being an egg substitute composition.

6. The composition of claim 1 or 2, wherein the bakery products are baked confectionery products.

7. Bakery dough comprising a lipid-protein complex and a thickening agent, wherein a content of the thickening agent in the bakery dough is 0.01 to 1.0 parts by mass per part by mass of solids of the lipid-protein complex.

8. A bakery product being a heat-processed product of the bakery dough of claim 7.

9. A method for producing a composition for bakery products, the composition comprising a lipid-protein complex and a thickening agent, wherein a content of the thickening agent in the composition is 0.01 to 1.0 parts by mass per part by mass of solids of the lipid-protein complex,
the method comprising:
(Step 1) homogenizing a liquid mixture comprising a lipid and a protein to form the lipid-protein complex.

10. A method for substituting for egg in bakery products, comprising incorporating a composition for bakery products into bakery dough, wherein the composition comprises a lipid-protein complex and a thickening agent, and a content of the thickening agent in the composition is 0.01 to 1.0 parts by mass per part by mass of solids of the lipid-protein complex.
